# EUROPEAN PATENT SPECIFICATION

(11) **EP 1 594 360 B1**
(45) Date of publication and mention of the grant of the patent: **05.12.2007**
(21) Application number: 03711040.0
(22) Date of filing: 13.02.2003
(51) Int. Cl.: A01M 1/20

(54) **TWO-STAGE DISPENSING MAT**
MATTE ZUR ZWEISTUFIGEN DUFTSTOFFABGABE
TAPIS DE DISTRIBUTION A DEUX ETAPES

(43) Date of publication of application: 16.11.2005
(73) Proprietor: S.C. JOHNSON & SON, INC., Racine, Wisconsin 53403 (US)
(72) Inventor: FLASHINSKI, Stanley, J., Racine, WI 53402 (US); PARSONS, William, G., Racine, WI 53406 (US); ENDERS, Susan, C., Racine, WI 53405 (US); PINKHAM, Jeffrey, D., Gurnee, IL 60031 (US)
(74) Representative: Ruschke, Hans Edvard
(86) International application number: PCT/US2003/004451
(87) International publication number: WO 2004/073399

(56) References cited:
- WO-A-02/17977
- DE-A- 19 932 385
- GB-A- 2 122 903
- US-A- 4 695 434

## Description

The present invention relates to dispensing volatile materials such as insecticides, insect repellants, fragrances, and deodorizers. It provides mats designed to release the volatile material when the mat is heated.

It is known to impregnate or coat a solid porous mat with a volatile material, and/or to place a volatile material in a metal pan-like structure. These structures are then placed on heaters to cause the volatile to vaporize into the ambient air. See generally U.S. patent 6,031,967 and WO 99/66791.

However, there can be a time lag between the initiation of the heating of the mat and when the concentration of active in the room reaches a desired level. For example, when the mat contains an insecticide, it may take a few minutes before the desired level of protection from mosquitoes or other insects is achieved. This is a particular problem where the product is primarily designed to provide a prolonged release of active (e.g. to provide overnight protection against mosquitoes).

To minimize the time lag, one could try increasing the concentration of active in the mat. However, actives are often costly, and in any event the increased concentration may lead to unnecessarily high levels of insecticide or other active being dispensed into the air after the initial period.

Another approach would be to modify heaters so that they work at one temperature during an initial phase and then work at a reduced temperature at all other times. However, much of the public is unlikely to want to throw away their existing heaters and pay the cost of new ones having this capability. In any event, including this capability in future heaters would unnecessarily increase the cost of such heaters.

U.S. patent 5,657,574 proposed a mosquito coil having a uniform concentration of insect control agent spread throughout it, but with the coil having an enlarged ignition end. When the coil was first lit an extra burst of insecticide was dispensed because more of the coil was burnt at that time. However, this approach is not suitable for a mat where the entire bottom of the mat is designed to be exposed to the heat source at once.

WO 99/66791 provided a slab-type mat for insertion in an indexed fashion into a heater. Discrete regions of the mat are heated in sequence. The primary purpose of the slab is to provide a mechanism for indexing a new mat section over the heater when the preceding section had been used up. However, the publication also describes that the sequential regions could carry different volatile ingredients or different concentrations of the same volatile ingredient. One example that is given is providing a high concentration section to be used at night and a low concentration section to be used during the day. Unfortunately, this approach requires the user to sequentially move the slab when the next stage of usage is desired.

In WO 02/17977 our company recently disclosed a mat comprising an outer mat and a central lower section separated by a vertical groove extending through the mat. Different insecticides, or different concentrations of actives, could be provided in each of the two cellulosic sections. The central section was typically heated more quickly (as low cost heaters, such as those typically used in developing countries, often heat the hottest near the center of the heater). As a result, the insecticide in the central portion was dispersed more quickly, while that in the outer mat was dispersed more slowly.

These mats were somewhat difficult to manufacture because the material had to be cut entirely through, resulting in multiple pieces needing to be assembled. This added to the cost of production.

U.S. patent 4,439,415 described a substrate for dispensing insecticidal vapors having distinct regions impregnated with different insecticides or other volatiles. The distinct regions were provided either on a single substrate with the sections separated by a substance for rendering the material non-absorptive, or were constructed from different pieces of substrate which were coupled together. The device again required multiple parts.

GB 2,122,903 taught a substrate having an aluminum foil bottom layer on which one or more paper segments were mounted. The segments were divided by separators, which were constructed of rubber or synthetic resins which prevented permeation of liquid. Therefore, different volatiles could be provided on the segments without having a volatile from a first segment move to a second segment. This method also required difficult manufacturing steps.

Accordingly, a need still exists for improved volatile dispensing mats.

### SUMMARY OF THE INVENTION

The present invention provides mats for dispensing volatile vapors. In one form there is a substrate having a first substrate portion and a second substrate portion, the second substrate portion being positioned at least somewhat radially outward of the first portion.

There is also an upwardly open depression formed in an upper wall of the substrate, and a moat formed in an upper wall of the substrate radially outward from the upwardly open depression. The first substrate portion is radially positioned between the upwardly open depression and moat, with the upwardly open depression preferably being essentially centrally located cup structure.

The first substrate portion has applied thereto a first volatile material, the volatile material comprising an active selected from the group consisting of insect control agents, fragrances, deodorizers, and combinations thereof. The second substrate portion is positioned radially outward of the moat and has applied thereto a second volatile material which is an active selected from the group consisting of insect control agents, fragrances, deodorizers, and combinations thereof.

The first volatile material can have an active that is not present in the second volatile material, or the second volatile material can have an active that is not present in the first volatile material. Alternatively, one can provide the first volatile material with at least one active that is the same as an active in the second volatile material, but that active is present at different concentrations in the first volatile material than in the second volatile materials (typically higher in the first volatile material).

As yet another alternative, the first volatile material can have at least one active that is the same as an active in the second volatile material, but the remainder of the first volatile material may not be entirely identical to the remainder of the second volatile material. In this regard, one can retard or increase the rate of release by the selection of suitable solvents or binders.

The term "mat" is used herein to include any structure suitable for use with conventional vapor dispensers, regardless of the precise shape. Slab-like mats are preferred.

The term "insect control" is defined to mean killing, repelling, or otherwise altering the behavior or development of insects. "Insect control agent" is used herein in its broadest sense to include not only insecticides and repellants but also growth regulators and other agents capable of achieving insect control. "Insect" is defined to mean actual insects as well as spiders, millipedes, and other small animals commonly controlled in the same manner or with the same agents as are insects.

The location of the upwardly open depression in the substrate can be selected to be generally centered over the heater's hot spot when positioned over the heater. Thus, for most mats the upwardly open depression will be at the radial center of the mat.

In an insect control application, we prefer to use a more highly volatile active for the central depression. Particularly preferred is where the active in the volatile material of the outer substrate region is Pynamin Forte whose release rate is somewhat slowed with piperonyl butoxide and the active in the volatile material of the central depression is transfluthrin.

Another form the invention provides a method for controlling insects. One places such a mat on a heater, and then heats the mat to thereby cause the first and second volatile materials to be dispensed from the mat.

In yet another form of the invention there is provided a method of constructing such a dispensing mat. One obtains a slab of a substrate material. One then simultaneously compresses a central portion of the slab and also a portion that radially surrounds that central portion, to thereby form an upwardly open central depression radially surrounded by a moat.

One then deposits a first volatile material in the upwardly open central depression, and deposits a second volatile material that is different from the first volatile material on a portion of the slab radially outward of the moat. The moat acts to minimize bleed between the two portions of the mat (e.g. while the mat is being stored for shipment, inventory, or store display).

This method can also include the further step of adhering a metallic layer on a bottom surface of the slab. This causes heat from a heater to be more quickly spread out (e.g. heat from a heater's hot spot is spread under the full substrate that has been impregnated).

When used as an insect control device, the device of the invention allows the user to achieve desired protection very quickly, without sacrificing long-term protection. When dispensing a deodorizer or fragrance, the invention has the advantage of covering over existing malodors very quickly (e.g. in a bathroom), without sacrificing the ability to provide fragrance over the long term.

The present invention is further capable of turning a disadvantage of inexpensive heaters (non-uniform heating across the heating face) into an advantage. This is achieved by placing the central depression over a central portion of the heater.

These advantages are achieved while permitting a very efficient manufacturing process to be able to produce the item. A low cost stamping operation can quickly form the upwardly open depression and moat, and the impregnation can be facilitated through the use of the cup.

It should be appreciated that the cup has two primary functions. First, it provides a quick way of impregnating the central region of the mat (one can pour the volatile into the cup and let it seep through the side walls of the cup into the first portion). This reduces the period of time necessary to cause an effective impregnation, thus speeding up the manufacturing process.

Second, the bottom of the cup is closer to the heater. In some embodiments (e.g. when material has been removed), this reduces the insulation effect of the material itself, speeding up the initial burst of active once heating begins.

These and still other advantages of the present invention will appear from the following description. In that description reference is made to the accompanying drawings in which there is shown by way of illustration preferred embodiments of the invention. However, the claims should be looked to in order to judge the full scope of the invention.

### BRIEF DESCRIPTION OF THE DRAWINGS

FIG. 1 is a perspective view of a dispensing mat of the present invention which has been positioned on a heater;

FIG. 2 is a sectional view of the dispensing mat of FIG. 1, taken along line 2-2 of FIG. 1;

FIG. 3 is a top plan view of a substrate portion of the mat with a central depression formed therein;

FIG. 4 is a top plan view of the FIG. 3 substrate, but with a moat also formed therein;

FIG. 5 is an exploded perspective view of the FIG. 1 mat; and

FIGS. 6A-6F are top views of alternate embodiments of mats of the present invention.

### DETAILED DESCRIPTION OF THE PREFERRED EMBODIMENT

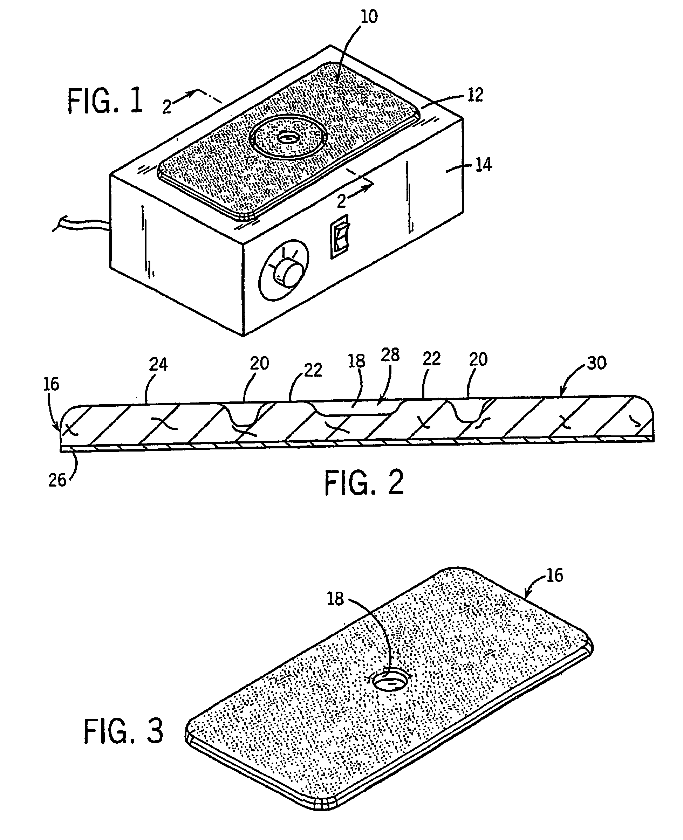

Referring first to FIG. 1, a mat 10 is shown placed upon a horizontal burner face 12 of an electric heater 14. The heater 14 can be an electrical-resistance heater, such as the heater sold by as the RAID® heater by S.C. Johnson & Son, Inc. However, other heaters could also be used, including without limitation those with horizontal, vertical, or other orientation of their heating surfaces.

The mat 10 is primarily a slab-like substrate 16 in which a cup-shaped depression is provided at the approximate center and a circumferential moat 20 is provided a short distance from the central depression 18. The moat divides the substrate 16 into a first/inner substrate portion 22 (provided between the central depression 18 and the moat), and a second substrate portion 24 (located radially outside of the moat 20).

Referring now to FIG. 2, the substrate 16 can be constructed either by removing material from the center of the substrate 16 or by compressing that material. Similarly, the moat 20 can be cut out of the substrate 16 or stamped using a compression device. Most preferably, the depression 18 and moat 20 are simultaneously formed in a single compression stamping applied at the top of the substrate.

The depression 18 and moat 20 preferably do not extend through the bottom of the substrate 16, such that the substrate 16 remains a single piece of material. The first and second substrate portions 22 and 24 may be treated with different active(s), and/or different levels of actives, or be provided with different non-active additives to create varying rates of dispersion or varied effectiveness.

In the most preferred mats of the present invention the substrate 16 is adhered to a metal foil backing 26. This improves heat conduction from the heater 14 along the mat 10.

The upper part of the substrate 16 is preferably a pulp/cellulose-based material such as a cardboard, or a cardboard cotton mix. The substrate can be sized and dimensioned to be placed on the heating surface 12 of a conventional heater 14.

Alternatively, the substrate could be formed of other porous materials such as synthetic fibers, sintered glass, polymeric blocks, plastic beads, natural or synthetic fabrics, ceramic materials (such as terra cotta or earthenware), and other absorbent and adsorbent porous materials. When ceramic materials are used, the central depression 18 can be coated with a suitable ceramic glaze, such as silica-based low fire clear glaze.

FIGS. 3 - 5 show mat 10 in various stages of construction. After an appropriate material for substrate 16 is selected, the central depression 18 is formed in the substrate 16. The circumferential moat 20 is also formed.

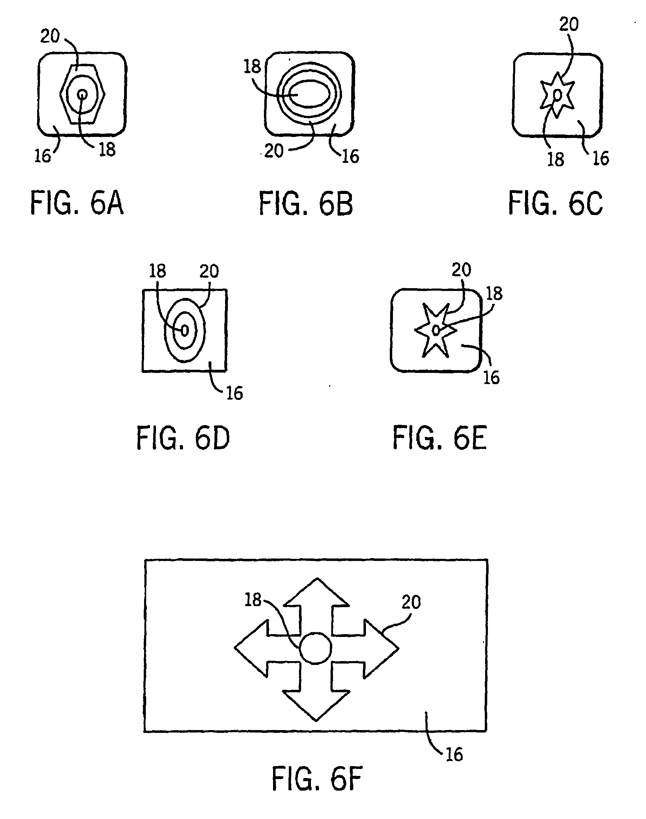

In the most preferred form the inner substrate portion 22 is in the shape of a lifesaver. FIGS. 6A-F show that the central depression 18 and the moat 20 can be provided in a number of different shapes, which result in the portion 22 having a variety of other shapes. It is most desirable that the moat completely, or at least to the extent of 180°, surround the central depression 18 to help separate the first substrate portion 22 from the outer substrate portion 24. This moat helps minimize bleeding of active or volatile from the inner substrate portion 22 to the outer substrate portion 24.

As the moat will typically not be cut all the way through the slab, there could be some slight bleeding between the portions 22 and 24, near the metal foil backing 26. However, where the moat is relatively deep, bleeding is essentially prevented, especially during the heating step when the volatiles are most mobile.

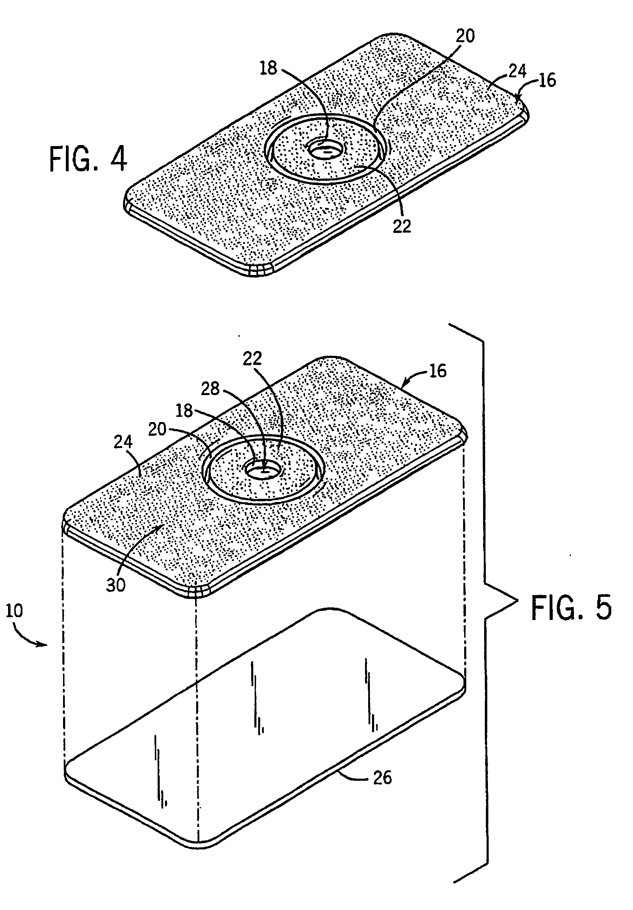

Referring now to FIG. 5, a metal foil backing layer 26 can be adhered to the bottom side of the substrate 16. The layer 26 can be made of an aluminum or other metal foil, and it can be adhered to the substrate, such as by using a polymeric adhesive. One such adhesive is "711" (commercially available from Manufacturer Resources, Inc. of New Berlin, Wisconsin). Other acceptable adhesives are made of acrylic, urethane, or other temperature resistant materials. Other methods of joining a metallized foil to the substrate 16 can alternatively be used.

After the substrate 16 is joined to the metallized foil backing layer 26, a first volatile material 28 containing a desired active can be dripped or poured into the central depression 18. The material 28 quickly bleeds into the first portion 22, thereby impregnating it. The moat 20 inhibits still further bleeding or creeping of active to the rest of the mat 10 to the outer substrate portion 24.

A second volatile material 30 containing an active, which preferably is different from that in the first volatile material, can be coated, impregnated, or otherwise applied to the outer substrate portion 24. The moat 20 also limits bleeding of the second volatile inwardly towards the first portion 22.

The outer substrate portion 24 can be impregnated with a second volatile material 30 having a slower releasing active ingredient and the central depression 18 can be coated with a chemically distinct first volatile material 28 having a faster releasing active ingredient. As the most preferred insect control device, the second volatile material 30 is 100 mg of a liquid solution having a chemical composition of 40% Pynamin Forte® (an insecticide active ingredient), 40% piperonyl butoxide (PBO, synergist/release agent), and 20% Isopar M (hydrocarbon solvent).

A first volatile material 28 for use with such a mat is 50 mg of a liquid solution having a chemical composition of 4% transfluthrin (insecticide active ingredient) and 96% Isopar E (hydrocarbon solvent). Transfluthrin vaporizes more quickly than does the Pynamin Forte because it has a higher vaporization pressure.

Alternatively, the volatile materials 28 and 30 could include any other suitable known insecticides, repellants, growth regulators, or other insect control agent. For example, the volatile materials 22 and 24 could include organic phosphorus insecticides, lipidaniide insecticides, natural repellants such as citronella oil, natural pyrethrum and pyrethrum extract, and synthetic pyrethroids. Suitable synthetic pyrethroids include allethrin as D-allethrin, Pynamin^{®}, benfluthrin, bifenthrin, S-bioallethrin, esbiothrin, esbiol, bioresmethrin, cycloprothrin, cyfluthrin, beta-cyfluthrin, cyhalothrin, deltamethrin, empenthrin, esfenvalerate, fenpropathrin, fenvalerate, flucythrinate, tau-fluvalinate, kadethrin, permethriri, phenothrin, prallethrin as Etoc^{®}, resmethrin, tefluthrin, tetramethrin or tralomethrin. Other volatile insecticides as described in U.S. patent 4,439,415 can also be used.

Volatile insect growth control agents such as methoprene and hydroprone may also be used. Alternatively, or in addition, fragrances and deodorizers may be used, such as limonene, eucalyptus, and citronella.

Although moat 20 has been shown to effectively limit creep or bleeding of the active 28 from the first substrate portion 22 to the second substrate portion 24 (and vice versa), the moat 20 can also be treated with a sealant such as a rubber, a resin, or another type of material preventing absorption of the active 28 to help prevent any creep of actives.

In one form, when the mat 10 is first heated, the mat 10 provides for a very high volume burst of dispensed volatile material 28. Thereafter, the rate of dispensing levels off as the remaining dispensing largely occurs from the second portion 24. This helps quickly protect or otherwise modify the environmental conditions of an area not previously subject to adequate treatment, while providing long-term protection thereafter.

In one form (which is somewhat similar to the FIG. 4 version, but with a wider moat), the central depression 18 can be centered in the substrate 16, and can have a diameter of about .34 cm. The moat 20 can be in the form of a ring having an inner diameter of about 1.06 cm and an outer diameter of about 1.75 cm. The depth of this substrate 16 can be about .26 cm, and the depth of each of the central depression 18 and moat 20 can be about .1 cm or deeper.

A number of variations in the construction of the central portion 18 and moat 20 are shown in FIGS. 6A-F. In particular the moat 20 is shown as a polygonal configuration (6A), elliptical configuration (6B), as a star (6C), as a wide circle (6D), as a contoured star (6E), and as a four arrow pattern (6F). The color of each of the different mat regions can be separately and differently dyed, such as by including varied dyes in the impregnation materials. Where the dye is also volatile, the change or fading of color can be a use-up cue. The shape of the central portion 18 can also be varied, such as is shown in FIG. 6B, wherein an elliptical center depression 18 is shown.

Although a single moat 20 is shown, it will be apparent that a mat with multiple concentric moats, in a "bull's-eye" pattern, and other varying volatiles could also be provided so as to create three or more different dispensing regions. Still other variations to the preferred embodiments are intended to be within the scope of the claims as well.

Moreover, the mat of the present invention could also be a disinfectant/fragrancer/deodorizer, using any of a wide variety of active ingredients for such purposes, including without limitations glycols, trimethylene and dipropylene known in the art. Further, even with the same active and substrates, a mat constructed in accordance with the present invention could work if solvents, binders, and the like were adjusted to suitably control release rates. For example, the middle volatile could contain Pynamin Forte in a hydrocarbon solvent, while the outer volatile could be the same, albeit with some piperonyl butoxide. Accordingly, the claims should be referenced in order to determine the full scope of the invention.

### INDUSTRIAL APPLICABILITY

The invention provides improved mats for the controlled release of insect control agents, fragrances, disinfectants, and similar useful, volatile materials, particularly those where a more vigorous dispensing occurs when the product is first used.

## Claims

1. A mat (10) for dispensing volatile vapors, comprising:
a substrate (16) having a first substrate portion (22) and a second substrate portion (24), the second substrate portion being positioned at least somewhat radially outward of the first portion;
an upwardly open depression (18) formed in an upper wall of the substrate;
a moat (20) formed in an upper wall of the substrate radially outward from the upwardly open depression, with said first substrate portion being radially positioned between the upwardly open depression and moat;
said first substrate portion having applied thereto a first volatile material, the volatile material comprising an active selected from the group consisting of insect control agents, fragrances, deodorizers, and combinations thereof; and
the second substrate portion being positioned radially outward of the moat and having applied thereto a second volatile material, the second volatile material comprising an active selected from the group consisting of insect control agents, fragrances, deodorizers, and combinations thereof.

2. The mat of claim 1, wherein the first volatile material has an active that is not present in the second volatile material.

3. The mat of claim 1, wherein the second volatile material has an active that is not present in the first volatile material.

4. The mat of claim 1, wherein the first volatile material has at least one active that is the same as an active in the second volatile material but that active is present at a different concentration in the first volatile material than in the second volatile material.

5. The mat of claim 1, wherein the first volatile material has at least one active that is the same as an active in the second volatile material but the remainder of the first volatile material is not completely identical to the remainder of the second volatile material.

6. The mat of claim 1, wherein the upwardly open depression is radially centrally positioned in the substrate.

7. The mat of claim 1, wherein the moat completely radially surrounds the upwardly open depression.

8. The mat of claim 1, wherein the substrate is made at least in part of a cellulosic material and is mounted on a lower metallic layer.

9. The mat of claim 8, wherein the upwardly open depression and the moat were formed by compressing portions of the substrate.

10. The mat of claim 1, wherein an active in the second volatile material is Pynamin Forte and an active in the first volatile material is transfluthrin.

11. The mat of claim 1, wherein a portion of the moat is in the shape of an arrow.

12. The mat of claim 1, wherein the moat is in the shape of a star.

13. A method for controlling insects, comprising:
obtaining a mat (10) having:
a substrate (16) having a first substrate portion (22) and a second substrate portion (24), the second substrate portion being positioned at least somewhat radially outward of the first portion;
an upwardly open depression (18) formed in an upper wall of the substrate;
a moat (20) formed in an upper wall of the substrate radially outward from the upwardly open depression, with said first substrate portion being radially positioned between the upwardly open depression and moat;
said first substrate portion having applied thereto a first volatile material, the volatile material comprising an active selected from the group consisting of insect control agents, fragrances, deodorizers, and combinations thereof; and
the second substrate portion being positioned radially outward of the moat and having applied thereto a second volatile material, the second volatile material comprising an active selected from the group consisting of insect control agents, fragrances, deodorizers, and combinations thereof;
placing the mat adjacent a heater; and
heating the mat to thereby cause the first and second volatile materials to be dispensed from the mat.

14. A method of constructing a dispensing mat (10), the method comprising:
obtaining a slab of a substrate material (16);
simultaneously compressing a first portion (22) of the slab and also a portion (24) radially surrounding the first portion to thereby form an upwardly open central depression (18) radially surrounded by a moat (20);
depositing a first volatile material in the upwardly open central depression; and
depositing a second volatile material that is different from the first volatile material on a portion of the slab radially outward of the moat.

15. The method of claims 14, further comprising the step of adhering a metallic layer on a bottom surface of the slab.

## Patentansprüche

1. Eine Matte (10) für die Abgabe von flüchtigen Dämpfen, umfassend:
ein Substrat (16) mit einem ersten Substratteil (22) und einem zweiten Substratteil (24), wobei der zweite Substratteil gegenüber dem ersten Teil radial zumindest etwas weiter außen positioniert ist,
eine nach oben offene Vertiefung (18), die in einer oberen Wand des Substrats ausgebildet ist,
eine Mulde (20), die gegenüber der nach oben offenen Vertiefung radial weiter außen in einer oberen Wand des Substrats ausgebildet ist, wobei der erste Substratteil zwischen der nach oben offenen Vertiefung und der Mulde radial angebracht ist,
wobei der erste Substratteil ein erstes flüchtiges Material aufweist und das flüchtige Material einen Wirkstoff umfasst, der aus der Gruppe bestehend aus Insektenbekämpfungsmitteln, Duftstoffen, Desodorierungsmitteln oder deren Kombinationen ausgewählt wird, und
wobei der zweite Substratteil gegenüber der Mulde radial weiter außen positioniert ist und ein zweites flüchtiges Material aufweist und das zweite flüchtige Material einen Wirkstoff umfasst, der aus der Gruppe bestehend aus Insektenbekämpfungsmitteln, Duftstoffen, Desodorierungsmitteln oder deren Kombinationen ausgewählt wird.

2. Die Matte nach Anspruch 1, wobei das erste flüchtige Material einen Wirkstoff aufweist, der in dem zweiten flüchtigen Material nicht vorliegt.

3. Die Matte nach Anspruch 1, wobei das zweite flüchtige Material einen Wirkstoff aufweist, der in dem ersten flüchtigen Material nicht vorliegt.

4. Die Matte nach Anspruch 1, wobei das erste flüchtige Material zumindest einen Wirkstoff aufweist, der auch im zweiten flüchtigen Material vorliegt, jedoch in einer unterschiedlichen Konzentration.

5. Die Matte nach Anspruch 1, wobei das erste flüchtige Material zumindest einen Wirkstoff aufweist, der auch im zweiten flüchtigen Material vorliegt, der Rest des ersten flüchtigen Materials jedoch nicht vollständig identisch ist mit dem Rest des zweiten flüchtigen Materials.

6. Die Matte nach Anspruch 1, wobei die nach oben offene Vertiefung radial an zentraler Stelle im Substrat angebracht ist.

7. Die Matte nach Anspruch 1, wobei die Mulde die nach oben offene Vertiefung vollständig radial umschließt.

8. Die Matte nach Anspruch 1, wobei das Substrat zumindest teilweise aus einem Cellulosematerial gefertigt ist und auf einer unteren Metallschicht angebracht ist.

9. Die Matte nach Anspruch 8, wobei die nach oben offene Vertiefung und die Mulde ausgebildet wurden, indem Teile des Substrats komprimiert wurden.

10. Die Matte nach Anspruch 1, wobei ein Wirkstoff in dem zweiten flüchtigen Material Pynamin Forte ist und ein Wirkstoff in dem ersten flüchtigen Material Transfluthrin ist.

11. Die Matte nach Anspruch 1, wobei ein Teil der Mulde in Form eines Pfeils vorliegt.

12. Die Matte nach Anspruch 1, wobei die Mulde sternförmig ist.

13. Ein Verfahren zur Insektenbekämpfung, umfassend:
die Ausbildung einer Matte (10) mit:
einem Substrat (16) mit einem ersten Substratteil (22) und einem zweiten Substratteil (24), wobei der zweite Substratteil gegenüber dem ersten Teil radial zumindest etwas weiter außen positioniert ist,
einer nach oben offenen Vertiefung (18), die in einer oberen Wand des Substrats ausgebildet ist,
einer Mulde (20), die gegenüber der nach oben offenen Vertiefung radial weiter außen in einer oberen Wand des Substrats ausgebildet ist, wobei der erste Substratteil zwischen der nach oben offenen Vertiefung und der Mulde radial angebracht ist,
wobei der erstes Substratteil ein erstes flüchtiges Material aufweist und das flüchtige Material einen Wirkstoff umfasst, der aus der Gruppe bestehend aus Insektenbekämpfungsmitteln, Duftstoffen, Desodorierungsmitteln oder deren Kombinationen ausgewählt wird, und
wobei der zweite Substratteil gegenüber der Mulde radial weiter außen positioniert ist und ein zweites flüchtiges Material aufweist und das zweite flüchtige Material einen Wirkstoff umfasst, der aus der Gruppe bestehend aus Insektenbekämpfungsmitteln, Duftstoffen, Desodorierungsmitteln oder deren Kombinationen ausgewählt wird,
das Anbringen der Matte an einer Heizvorrichtung, und
das Erwärmen der Matte, so dass das erste und zweite flüchtige Material aus der Matte abgegeben werden.

14. Verfahren zur Herstellung einer Spendermatte (10), umfassend:
die Bereitstellung einer Platte eines Substratmaterials (16),
das gleichzeitige Komprimieren eines ersten Teils (22) der Platte sowie eines Teils (24), welcher den ersten Teil radial umschließt, um so eine nach oben offene zentrale Vertiefung (18), die von einer Mulde (20) radial umschlossen wird, auszubilden,
das Anbringen eines ersten flüchtigen Materials in der nach oben offenen zentralen Vertiefung, und
das Anbringen eines zweiten flüchtigen Materials, welches sich von dem ersten flüchtigen Material unterscheidet, auf einem gegenüber der Mulde radial weiter außen befindlichen Teil der Platte.

15. Das Verfahren nach Anspruch 14, weiterhin umfassend den Schritt des Anbringens einer Metallschicht auf der Unterseite der Platte.

## Revendications

1. Plaquette (10) pour distribuer des vapeurs volatiles, comprenant :
un substrat (16) ayant une première partie de substrat (22) et une seconde partie de substrat (24), la première partie de substrat étant positionnée au moins assez radialement vers l'extérieur de la première partie ;
une dépression ouverte vers le haut (18) formée dans la paroi supérieure du substrat ;
une rigole (20) formée dans la paroi supérieure du substrat radialement vers l'extérieur depuis la dépression ouverte vers le haut, ladite première partie de substrat étant radialement positionnée entre la dépression ouverte vers le haut et la rigole ;
ladite première partie de substrat ayant appliqué dessus un premier matériau volatile, le premier matériau volatile comprenant une substance active sélectionnée dans le groupe consistant en des agents anti-insectes, des fragrances, des désodorisants, et des combinaisons de ceux-ci ; et
la seconde partie de substrat étant positionnée radialement vers l'extérieur de la rigole et ayant appliqué dessus une second matériau volatile, le second matériau volatile comprenant une substance active sélectionnée dans le groupe consistant en des agents anti-insectes, des fragrances, des désodorisants, et des combinaisons de ceux-ci.

2. Plaquette selon la revendication 1, dans laquelle le premier matériau volatile a une substance active qui n'est pas présente dans le second matériau volatile.

3. Plaquette selon la revendication 1, dans laquelle le second matériau volatile a une substance active qui n'est pas présente dans le premier matériau volatile.

4. Plaquette selon la revendication 1, dans laquelle le premier matériau volatile a au moins une substance active qui est la même qu'une substance active dans le second matériau Volatile mais cette substance active est présente à une concentration différente dans le premier matériau volatile que dans le second matériau volatile.

5. Plaquette selon la revendication 1, dans laquelle le premier matériau volatile a au moins une substance active qui est la même qu'une substance active dans le second matériau volatile mais le reste du premier matériau volatile n'est pas complètement identique au reste du second matériau volatile.

6. Plaquette selon la revendication 1, dans laquelle la dépression ouverte vers le haut est positionnée radialement centralement dans le substrat.

7. Plaquette selon la revendication 1, dans laquelle la rigole entoure complètement radialement la dépression ouverte vers le haut.

8. Plaquette selon la revendication 1, dans laquelle le substrat est fait au moins en partie d'une matériau cellulosique et est monté sur une couche métallique inférieure.

9. Plaquette selon la revendication 8, dans laquelle la dépression ouverte vers le haut et la rigole ont été formées par des parties comprimées du substrat.

10. Plaquette selon la revendication 1, dans laquelle une substance active dans le second matériau volatile est de la Pynamin Forte et une substance active dans le premier matériau volatile est de la transfluthrine.

11. Plaquette selon la revendication 1, dans laquelle une partie de la rigole est sous la forme d'une flèche.

12. Plaquette selon la revendication 1, dans laquelle la rigole est sous forme d'une étoile.

13. Procédé anti-insectes, comprenant :
obtenir une plaquette 10) ayant :
un substrat (16) ayant une première partie de substrat (22) et une seconde partie de substrat (24), la seconde partie de substrat étant positionnée au moins assez radialement vers l'extérieur de la première partie ;
une dépression ouverte vers le haut (18) formée dans la paroi supérieure du substrat ;
une rigole (20) formée dans une paroi supérieure du substrat radialement vers l'extérieur depuis la dépression ouverte vers le haut, ladite première partie de substrat étant radialement positionnée entre la dépression ouverte vers le haut et la rigole ;
ladite première partie de substrat ayant appliqué dessus un premier matériau volatile, le premier matériau volatile comprenant une substance active sélectionnée dans le groupe consistant en des agents anti-insectes, des fragrances, des désodorisants, et des combinaisons de ceux-ci ; et
la seconde partie de substrat étant positionnée radialement vers l'extérieur de la rigole et ayant appliquée dessus une second matériau volatile, le second matériau volatile comprenant une substance active sélectionnée dans le groupe consistant en des agents anti-insectes, des fragrances, des désodorisants, et des combinaisons de ceux-ci ;
placer la plaquette au voisinage d'un dispositif chauffant ; et
chauffer le plaquette pour ainsi faire que les premier et second matériaux volatiles soient distribués depuis la plaquette.

14. Procédé de fabrication d'une plaquette de distribution (10), le procédé comprenant ;
obtenir une plaque de matériau de substrat (16) ;
comprimer simultanément une première partie (22) de la plaque et aussi une partie (24) entourant radialement la première partie pour ainsi former une dépression ouverte vers le haut centrale (18) entourée radialement par une rigole (20) ;
déposer un premier matériau volatile dans la dépression ouverte vers le haut centrale ; et
déposer un second matériau volatile qui est différent du premier matériau volatile sur une partie de la plaque radialement vers l'extérieur de la rigole.

15. Procédé selon la revendication 14, comprenant en outre l'étape consistant à coller une couche métallique sur une surface inférieure de la plaque.
